(19) **Europäisches Patentamt / European Patent Office / Office européen des brevets**

(11) **EP 3 567 753 B1**

(12) # EUROPEAN PATENT SPECIFICATION

(45) Date of publication and mention
of the grant of the patent:
**05.04.2023 Bulletin 2023/14**

(21) Application number: **18747310.3**

(22) Date of filing: **02.02.2018**

(51) International Patent Classification (IPC):
*H04B 7/0408* (2017.01)    *H04B 7/06* (2006.01)
*H04W 68/02* (2009.01)    *H04W 16/28* (2009.01)

(52) Cooperative Patent Classification (CPC):
**H04W 68/02; H04B 7/0408; H04B 7/0695;**
**H04B 7/26; H04W 16/28**

(86) International application number:
**PCT/CN2018/075031**

(87) International publication number:
**WO 2018/141262 (09.08.2018 Gazette 2018/32)**

(54) **METHODS AND APPARATUS FOR PAGING AND COMPUTER-READABLE STORAGE MEDIUM**

VERFAHREN UND VORRICHTUNG FÜR FUNKRUF UND COMPUTERLESBARES
SPEICHERMEDIUM

PROCÉDÉS ET APPAREIL DE RADIOMESSAGERIE ET SUPPORT DE STOCKAGE LISIBLE PAR
ORDINATEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **04.02.2017  CN 201710063953**

(43) Date of publication of application:
**13.11.2019  Bulletin 2019/46**

(60) Divisional application:
**23155240.7**

(73) Proprietor: **Huawei Technologies Co., Ltd.
Longgang District
Shenzhen, Guangdong 518129 (CN)**

(72) Inventors:
 • **MIAO, Jinhua
 Shenzhen
 Guangdong 518129 (CN)**
 • **CHAI, Li
 Shenzhen
 Guangdong 518129 (CN)**
 • **TANG, Xun
 Shenzhen
 Guangdong 518129 (CN)**

 • **ZHANG, Jian
 Shenzhen
 Guangdong 518129 (CN)**

(74) Representative: **Pfenning, Meinig & Partner mbB
Patent- und Rechtsanwälte
Theresienhöhe 11a
80339 München (DE)**

(56) References cited:
 **WO-A1-2012/062766    WO-A1-2014/189279
 CN-A- 105 900 372    CN-A- 105 917 705
 CN-A- 106 170 930    US-A1- 2012 275 380**

 • **SAMSUNG: "Paging in NR", 3GPP DRAFT;
 R2-1700823_PAGING IN NR, 3RD GENERATION
 PARTNERSHIP PROJECT (3GPP), MOBILE
 COMPETENCE CENTRE ; 650, ROUTE DES
 LUCIOLES ; F-06921 SOPHIA-ANTIPOLIS
 CEDEX ; FRANCE , vol. RAN WG2, no. Athens,
 Greece; 20170213 - 20170217 3 February 2017
 (2017-02-03), XP051222776, Retrieved from the
 Internet:
 URL:http://www.3gpp.org/ftp/tsg_ran/WG2_RL
 2/TSGR2_97/Docs/ [retrieved on 2017-02-03]**

- **MEDIATEK INC: "Paging in NR with Beam Sweeping", 3GPP DRAFT; R2-1701331 PAGING IN NR WITH BEAM SWEEPING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Athens, Greece; 20170213 - 20170217 3 February 2017 (2017-02-03), XP051222867, Retrieved from the Internet: URL:http://www.3gpp.org/ftp/tsg_ran/WG2_RL 2/TSGR2_97/Docs/ [retrieved on 2017-02-03]**
- **SAMSUNG: "Discussion on paging in NR - Multi-beam aspects", 3GPP DRAFT; R1-166790 NR PAGING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Gothenburg, Sweden; 20160822 - 20160826 21 August 2016 (2016-08-21), XP051125557, Retrieved from the Internet: URL:http://www.3gpp.org/ftp/Meetings_3GPP_ SYNC/RAN1/Docs/ [retrieved on 2016-08-21]**
- **NTT DOCOMO ET AL: "Discussion on paging design for NR", 3GPP DRAFT; R1-1700612_DISCUSSION ON PAGING DESIGN FOR NR_FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Spokane, USA; 20170116 - 20170120 16 January 2017 (2017-01-16), XP051208139, Retrieved from the Internet: URL:http://www.3gpp.org/ftp/Meetings_3GPP_ SYNC/RAN1/Docs/ [retrieved on 2017-01-16]**

## Description

### TECHNICAL FIELD

This application relates to the communications field, and more specifically, to paging methods, an apparatus and a computer-readable storage medium.

### BACKGROUND

A paging technology is used by a network device to notify a terminal device that a service needs to be established. The terminal device negotiates a time and/or resource location with the network device. The terminal device receives, at a corresponding negotiated location, a paging message sent by the network device, and completes a subsequent process, such as initial access or system message update. To save power, in a communications system, the terminal device wakes up at a fixed cycle to listen on a paging radio frame (Paging Radio Frame, PF) and/or a paging occasion (Paging Occasion, PO) to obtain the paging message. The terminal device wakes up on a corresponding PF and PO to listen on a channel (which is, for example, usually a physical downlink control channel (Physical Downlink Control Channel, PDCCH)), so as to obtain the paging message sent by the network device.

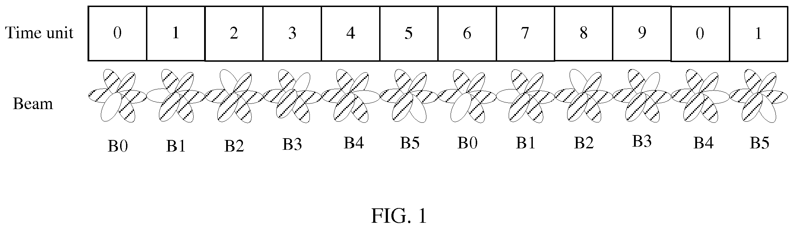

Data is transmitted between the network device and the terminal device by using a beam. FIG. 1 shows a correspondence between a beam and a subframe. As shown in FIG. 1, coverage areas and signal quality of a plurality of beams sent by the network device in different directions are different. Signal quality of different beams received by the terminal device may be different. Therefore, signal quality of a beam received by the terminal device and mapped to a paging subframe may be poor, and consequently, the terminal device cannot correctly receive the paging message.

WO 2014/189279 A1 discloses that paging receiver wakes up at PR (paging receiver) wake up time 1 or PR wake up time 2 depending on whether the paging is located before the SCH/BCH transmissions in SF0 or paging is located after the SCH/BCH transmissions in SF0.

SAMSUNG: "Paging in NR", 3GPP DRAFT; R2-1700823 Paging in NR, 3GPP, Mobile Competence Center; 650, ROUTE DES LUCIOLES; F-06921 SOPHIA-ANTIPOLIS CEDEX; FRANCE, vol. RAN WG2, no. Athens, Greece; 20170213-20170217, 2017-02-03, XP051222776, discloses waking up before the paging occasion, monitoring the broadcast signals and performs Rx beam sweeping.

MEDIATEK INC: "Paging in NR with Beam Sweeping", 3GPP DRAFT; R2-1701331 Paging in NR with Beam Sweeping, 3GPP, Mobile Competence Center; 650, ROUTE DES LUCIOLES; F-06921 SOPHIA-ANTIPOLIS CEDEX; FRANCE, vol. RAN WG2, no. Athens, Greece; 20170213-20170217, 2017-02-03, XP051222867, discloses that all UEs alerted by paging indication send random access request to the cells they camp on, and then the network can send paging messages more precisely, via unicast or multicast.

SAMSUNG: "Discussion on paging in NR - Multi-beam aspects", 3GPP DRAFT; R2-166790 NR Paging, 3GPP, Mobile Competence Center; 650, ROUTE DES LUCIOLES; F-06921 SOPHIA-ANTIPOLIS CEDEX; FRANCE, vol. RAN WG1, no. Gothenburg, Sweden; 20160822-20160826, 2016-08-21, XP051125557, proposes to minimize the total number of subframes for paging in DRX cycle, to reduce UE power consumption.

NTT DOCOMO ET AL: "Discussion on paging design for NR", 3GPP DRAFT; R1-1700612 Discussion on paging design for NR, 3GPP, Mobile Competence Center; 650, ROUTE DES LUCIOLES; F-06921 SOPHIA-ANTIPOLIS CEDEX; FRANCE, vol. RAN WG1, no. Spokane, USA; 20170116-20170120, 2017-01-16, XP051208139, discloses paging transmission with beam sweeping on discontinuous resources for paging overhead reduction.

### SUMMARY

The present invention is as defined in the appended independent claims. This application provides paging methods, an apparatus, and a computer-readable medium, so as to improve signal received quality of paging information.

According to a first aspect, a paging method performed by a terminal device as according to claim 1 is provided.

According to a second aspect, a paging method performed by a network device as according to claim 7 is provided.

According to a third aspect, an apparatus as according to claim 11 is provided.

According to a fourth aspect, a computer-readable storage medium as according to claim 12 is provided.

### DESCRIPTION OF DRAWINGS

FIG. 1 is a schematic diagram of a correspondence between a beam and a time unit;

FIG. 2 is a schematic diagram of a correspondence between a beam group and a time unit not covered by the claimed invention;

FIG. 3 is a schematic diagram of an application scenario;

FIG. 4 is a schematic flowchart of a paging method according to an embodiment of this application;

FIG. 5 is a schematic diagram of determining a target time interval according to an embodiment not covered by the claimed invention;

FIG. 6 is a schematic diagram of determining a target time interval according to another embodiment of this application;

FIG. 7 is a schematic diagram of determining a target time interval according to an embodiment not covered by the claimed invention;

FIG. 8 is a schematic diagram of determining a target time interval;

FIG. 9 is a schematic structural diagram of a terminal device according to an embodiment of this application;

FIG. 10 is a schematic structural diagram of a network device according to an embodiment of this application;

FIG. 11 is a schematic structural diagram of a terminal device according to another embodiment of this application; and

FIG. 12 is a schematic structural diagram of a network device according to another embodiment of this application.

## DESCRIPTION OF EMBODIMENTS

The following describes technical solutions of this application with reference to accompanying drawings.

It should be understood that, the technical solutions of the embodiments of this application may be applied to various communications systems, such as a global system for mobile communications (Global System for Mobile communication, GSM) system, a code division multiple access (Code Division Multiple Access, CDMA) system, a wideband code division multiple access (Wideband Code Division Multiple Access, WCDMA) system, a general packet radio service (General Packet Radio Service, GPRS), a long term evolution (Long Term Evolution, LTE) system, an LTE frequency division duplex (Frequency Division Duplex, FDD) system, an LTE time division duplex (Time Division Duplex, TDD) system, a universal mobile telecommunication system (Universal Mobile Telecommunication System, UMTS), a worldwide interoperability for microwave access (Worldwide Interoperability for Microwave Access, WiMAX) communications system, a new radio (New Radio, NR) system (also referred to as a 5G system), and a 4.5G system.

A terminal device in the embodiments of this application may include a handheld device, an in-vehicle device, a wearable device, or a computing device that has a wireless communication function; another processing device connected to a wireless modem; or user equipment (User Equipment, UE) in various forms, including a mobile station (Mobile Station, MS), a terminal (terminal), a terminal device (terminal device), and the like. For ease of description, the devices mentioned above are collectively referred to as a terminal device in the embodiments of this application.

A network device in the embodiments of this application may be a device configured to communicate with the terminal device. The network device may be a base transceiver station (Base Transceiver Station, BTS) in GSM or CDMA, or a NodeB (NodeB, NB) in a WCDMA system, or an evolved NodeB (Evolved NodeB, eNB or eNodeB) in an LTE system, or a radio controller in a cloud radio access network (Cloud Radio Access Network, CRAN) scenario. Alternatively, the network device may be a relay node, an access point, a vehicle-mounted device, a wearable device, or the like. This is not limited in the embodiments of this application.

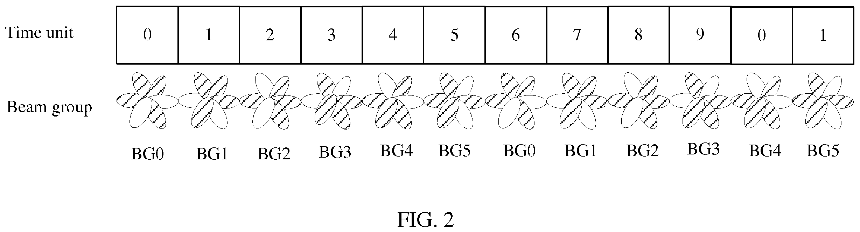

It should be understood that a beam group in this application may mean that the terminal device may communicate with the network device by using a plurality of beams simultaneously. The beam group may be obtained through division by the network device through channel measurement and notified to the terminal device, or may be obtained by the terminal device by using a broadcast message. For example, FIG. 2 shows a correspondence between a beam group and a subframe according to an embodiment not covered by the claimed invention.

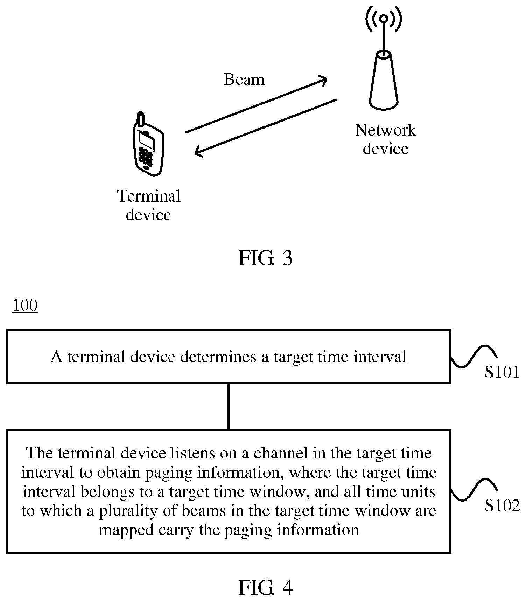

FIG. 3 is a schematic diagram of an application scenario according to an embodiment of this application, wherein the application scenario as such is not covered by the claimed invention. As shown in FIG. 3, a network device and a terminal device may communicate with each other by using beams. To each beam, one time unit in a radio frame may be mapped. The time unit may be a subframe, a slot, or a symbol. The network device may allocate beam identifiers to beams in different directions or combinations. For example, as shown in FIG. 1, beams or beam groups in different directions have different beam identifiers. In FIG. 1, beam identifiers may be represented as B0, B1, B2, B3, B4, and B5. In FIG. 2, beam groups are identified as B0, B1, B2, B3, B4, and B5.

One round of beam scanning in this embodiment of this application may refer to a process in which the network device traverses beams in all spatial directions once. Alternatively, it may be understood that the network device sends beams in all spatial directions in one round of beam scanning. For example, in FIG. 1, one round of beam scanning may refer to a scanning process from beam B0 to beam B5. In FIG. 2, not covered by the claimed invention, one round of beam scanning may refer to a scanning process from a B0 beam group to a B4 beam group.

Optionally, the network device may send a beam or a beam group in a sequential scanning manner, or the network device may send a beam or a beam group in another predetermined manner.

FIG. 4 is a schematic diagram of a paging method 100 according to an embodiment of this application, wherein FIG. 4 does not contain all of the features required by the claimed invention As shown in FIG. 4, the method 100 is performed by a terminal device and includes, apart from further steps not shown, the following steps:

S101. The terminal device determines a target time interval.
S102. The terminal device listens on a channel in the target time interval to obtain paging information, where the target time interval belongs to a target time window, and all time units to which a plurality of beams in the target time window are mapped carry the paging information.

Optionally, the time unit refers to a time resource unit. For example, the time unit may be a subframe, a slot, or a symbol. The time unit may be alternatively another time resource unit represented by time.

Optionally, the target time window may refer to one time interval or one time period.

Optionally, the plurality of beams may belong to one or more beam group s.

It should be understood that a network device may send the plurality of beams in the target time window, and all the time units to which the plurality of beams are mapped carry the paging information. If the terminal device listens on a channel in a time interval included in the target time window, the paging information may be obtained.

Optionally, the paging information carried in all the time units is the same. Therefore, the terminal device may obtain required paging information by receiving any piece of the paging information.

In this embodiment of this application, the terminal device determines the target time interval, and listens, in the target time interval, on a plurality of beams sent by the network device, to obtain the paging information. The target time interval belongs to the target time window. All subframes, to which a plurality of beams received by the terminal device in a continuous target time window are mapped, carry the paging information, thereby improving a probability that the terminal device receives the paging information in the target time interval, and further improving efficiency of obtaining the paging information by the terminal device.

In examples not covered by the claimed invention, the plurality of beams may include beams in at least two different directions.

It should be understood that, because the plurality of beams include the beams in at least two different directions, coverage areas of beams that carry the paging information are increased. Therefore, a probability of the terminal device being in the coverage areas of the plurality of beams is also increased, a possibility of receiving paging information with relatively good signal quality by the terminal device is improved, and efficiency of obtaining the paging information by the terminal device is further improved.

According to the invention, the plurality of beams may include a beam scanned in one round of beam scanning.

It should be understood that the beams sent by the network device in the target time window include a beam scanned in one round of beam scanning, and all the time units to which the beams sent in the target time window are mapped carry the paging information. Therefore, the beam scanned in one round of beam scanning improves spatial coverage of a beam to which information is mapped, and it can be ensured that the paging information carried by a beam that ensures signal quality can be received regardless of a location of the terminal device in a cell. Therefore, efficiency of receiving the paging information by the terminal device is improved.

Optionally, the paging information may include but is not limited to the following content: preamble information for performing random access for one or more terminal devices, time domain resource information for performing the random access process, frequency domain resource information for performing the random access process, and beam information for performing the random access process, so as to indicate a resource location or configuration information used by the terminal device to perform random access. The preamble, the time domain information, and the frequency domain information may be corresponding to service types, and may be sent in an index (English: index) manner, so that the network device learns of, based on a preamble, a time domain location, and a frequency domain location responded by the terminal device, a service type to-be-initiated by the terminal device or a size of a corresponding to-be-allocated resource. For example, if the network device is to page a low-latency service, the network device may define a preamble (English: preamble) as preamble 1, and send preamble 1 on subframe 0 and subcarrier 1. When the network device receives preamble 1 on subframe 0 and subcarrier 1, the network device may allocate a relatively fast scheduling manner, for example, use a relatively short TTI length to schedule another message (for example, a message 3 in the random access process) in the random process, so that the terminal device establishes a wireless connection as soon as possible.

Optionally, the paging information may be alternatively indication information used to indicate a location of second paging information. For example, the paging information indicates a first terminal device that the second paging information exists, and indicates resource location information of the second paging information. If the first terminal device receives the paging information, the first terminal device receives the second paging information at the resource location. If a second terminal device receives the paging information and finds that there is no indication instructing the second terminal device to receive the second paging information, the second terminal device does not perform a process of receiving the second paging information. In this way, a size of the paging information is reduced, and paging load is reduced.

Optionally, the paging information includes a temporary identifier of the terminal device, such as a cell radio network temporary identifier (cell Radio Network Temporary Identifier, C-RNTI). For example, for a small cell, when the terminal device does not need to perform an uplink synchronization process, the terminal device may send the temporary identifier by using an uplink resource, to reduce a connection establishment latency. Optionally, the paging information may further carry content such as uplink resource location information, so that the terminal device sends the temporary identifier at the uplink resource location.

That the terminal device determines a target time interval includes the following: The terminal device determines the target time window; and the terminal device determines the target time interval based on the target time window.

It should be understood that the terminal device may determine an entire time period occupied by the target time window as the target time interval. Alternatively, the terminal device may determine a part of the time period in the target time window as the target time interval. The terminal device listens on a channel in the entire target time window to obtain the paging information, or the terminal device listens on a channel in a part of a time interval in the target time window to obtain the paging information.

In this embodiment of this application, the terminal device determines the target time window, determines the target time interval based on the target time window, and listens, in the target time interval, on the plurality of beams sent by the network device, to obtain the paging information. All the subframes, to which the plurality of beams sent by the network device in the target time window are mapped, carry the paging information, thereby improving a probability that the terminal device receives the paging information in the target time interval, and further improving efficiency of obtaining the paging information by the terminal device.

In embodiments not covered by the claimed invention, the terminal device determines the target time window by using a plurality of methods. For example, the network device may send indication information to the terminal device, and the indication information may indicate the target time window.

According to the invention, the network device sends paging configuration information and beam configuration information to the terminal device. The paging configuration information is used to indicate a first paging time unit that carries the paging information, and the beam configuration information includes a correspondence between the beams sent by the network device and the time units to which the beams are mapped. The terminal device determines the first paging time unit based on the paging configuration information, and the first paging time unit is a time unit that carries the paging information. That the terminal device determines the target time window includes the following: The terminal device determines the target time window based on the first paging time unit and the correspondence.

In this embodiment of this application, the terminal device determines the paging configuration information and the beam configuration information, and determines the target time window based on the paging configuration information and the correspondence between a beam and a time unit, so as to receive the paging information. Therefore, efficiency of receiving the paging information is improved.

Optionally, the paging configuration information may include first configuration information and second configuration information, where the first configuration information is used to indicate a location of a radio frame that carries the paging information, and the second configuration information is used to indicate a location of the first paging time unit in the paging radio frame.

Optionally, the beam configuration information may be pattern (English: pattern) information sent by the beam. The paging configuration information may include: a paging cycle, a paging load interval in a cell, or a quantity of paging slots in a unit time, for example, a parameter T (indicating the paging cycle), and a quantity of paging times in an nB (used to indicate a quantity of paging times in a single discontinuous reception (Discontinuous Reception, DRX) cycle). To be specific, a quantity of paging occasions (Paging Occasion, PO) in a single DRX cycle. A larger value of nB indicates a stronger paging capability.

As a specific example, the following describes a manner in which the terminal device determines the first paging time unit based on the paging configuration information. The first paging time unit may be a paging occasion (Paging Occasion, PO).

In a first part, the terminal device calculates, based on the paging configuration information, a radio frame in which the paging information is located.

For example, the terminal device may calculate, based on a formula $PF = SFN \bmod T = (T \operatorname{div} N) * (UE\_ID \bmod N)$, the radio frame in which the paging information is located.

PF indicates a radio frame that includes one or more POs.

SFN indicates a system frame number; mod means taking a remainder; div indicates division; T indicates a paging cycle; and N indicates a quantity of paging radio frames in one DRX cycle. For example, the terminal device may determine N based on nB. A mapping relationship between nB and N is shown in Table 1. UE_ID indicates IMSI mod 1024. The IMSI indicates an international mobile subscriber identity (International Mobile Subscriber Identity Number, IMSI). The IMSI may be represented in a decimal manner, and the IMSI may be stored in a universal subscriber identity module (Universal Subscriber Identity Module, USIM).

**Table 1**

| nB | 4T | 2T | T | 1/2 T | 1/4 T | 1/8 T | 1/16 T | 1/32 T |
|----|----|----|---|-------|-------|-------|--------|--------|
| N | 1 | 1 | 1 | 1/2 | 1/4 | 1/8 | 1/16 | 1/32 |

In a second part, the terminal device may calculate a location of the PO in the PF.

Optionally, the terminal device may calculate the PO based on a formula:

$$i\_s = floor(UE\_ID/N) \bmod Ns,$$

where

$i\_s$ indicates an index indicating the PO in a subframe, and floor() indicates rounding down.

The terminal device may determine the location of the PO based on the index $i\_s$. For example, Table 2 and Table 3 respectively show relationships between the index $i\_s$ and the PO in two cases: frequency division duplex (Frequency division duplex, FDD) and time division duplex (Time Division Duplex, TDD).

**Table 2 (FDD mode)**

| Ns | PO (i_s=0) | PO (i_s=1) | PO (i_s=2) | PO (i_s=3) |
|----|-----------|-----------|-----------|-----------|
| 1 | 9 | N/A | N/A | N/A |
| 2 | 4 | 9 | N/A | N/A |
| 4 | 0 | 4 | 5 | 9 |

Ns indicates a quantity of opportunities to page a subframe in one radio frame. The second row is used as an example. Ns = 2 herein indicates that there are two paging opportunities in one radio frame, $i\_s$ is 0 and 1 respectively, and subframes are subframe 4 and subframe 9 respectively.

**Table 3 (TDD mode)**

| Ns | PO (i_s=0) | PO (i_s=1) | PO (i_s=2) | PO (i_s=2) |
|----|-----------|-----------|-----------|-----------|
| 1 | 0 | N/A | N/A | N/A |
| 2 | 0 | 5 | N/A | N/A |
| 4 | 0 | 1 | 5 | 6 |

In a specific embodiment, the terminal device may determine Ns based on nB, and a mapping relationship between nB and Ns is shown in Table 4.

**Table 4**

| nB | 4T | 2T | T | 1/2 T | 1/4 T | 1/8 T | 1/16 T | 1/32 T |
|----|----|----|---|-------|-------|-------|--------|--------|
| Ns | 4 | 2 | 1 | 1 | 1 | 1 | 1 | 1 |

That the terminal device determines the target time window based on the first paging time unit and the correspondence includes the following: The terminal device determines a first beam mapped to the first paging time unit; and the terminal device determines the target time window based on the first beam, where the plurality of beams include the first beam.

In examples not covered by the claimed invention, the target time window may be a time interval for performing one round of beam scanning starting from a preset second beam.

The preset second beam may be a beam pre-agreed upon by the network device and the terminal device. For example, the network device may indicate an identifier of the second beam to the terminal device after the second beam is preset.

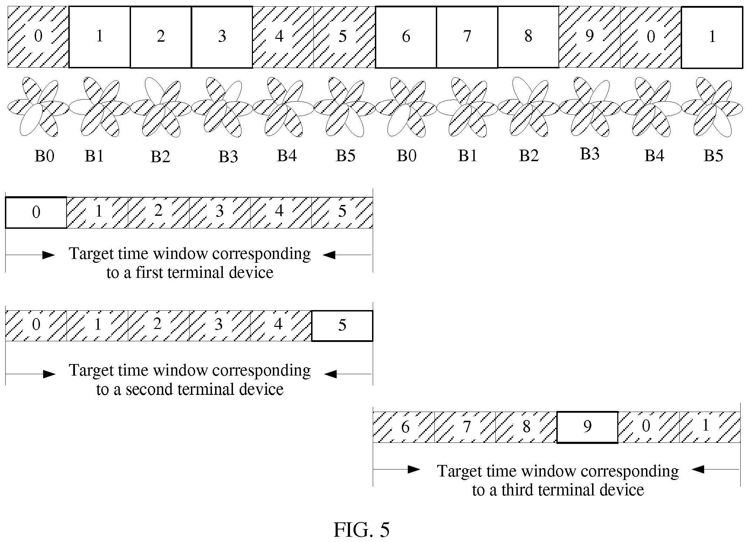

In a specific embodiment not covered by the claimed invention, FIG. 5 is a schematic diagram of determining a target time interval by a terminal device. This embodiment of this application is described by using an example in which a beam corresponds to a time unit. A person skilled in the art may understand that the embodiments of this application may be alternatively applied to a case in which a beam group corresponds to a time unit.

As shown in FIG. 5, the terminal device may be a first terminal device, a second terminal device, or a third terminal device. It is assumed that the time unit is a subframe, the first paging time unit may be referred to as a first paging subframe, and the preset second beam may be B0. Therefore, one round of beam scanning begins with B0 and ends with B5.

For the first terminal device, it is assumed that the first terminal device has determined that a first paging subframe of the first terminal device is subframe 0, and a beam corresponding to subframe 0 is B0. Therefore, the target time window is a time interval from B0 to B5, and subframes corresponding to the target time window are subframe 0 to subframe 5. To be specific, all subframe 0 to subframe 5 carry the paging information. The first terminal device may receive paging information in the target time window.

Similarly, for the second terminal device, it is assumed that a first paging subframe determined by the second terminal device is subframe 5, and a beam corresponding to subframe 5 is B5. Therefore, the target time window is still the time interval from B0 to B5. The second terminal device may listen on a channel in the time interval from B0 to B5, and subframes to which B0 to B5 are mapped are correspondingly subframe 0 to subframe 5. To be specific, all subframe 0 to subframe 5 carry the paging information.

For the third terminal device, it is assumed that a first paging subframe determined by the third terminal device is subframe 9, and a beam corresponding to subframe 9 is B3. Therefore, a determined target time window is a time interval from B0 to B5, and subframes to which B0 to B5 are mapped are subframe 6 to subframe 1 of a next frame. To be specific, all subframe 6 to subframe 1 of the next frame carry the paging information.

According to the invention, the target time window is a time interval for performing one round of beam scanning starting from the first beam. The target time interval may be all or a part of a time interval of the target time window.

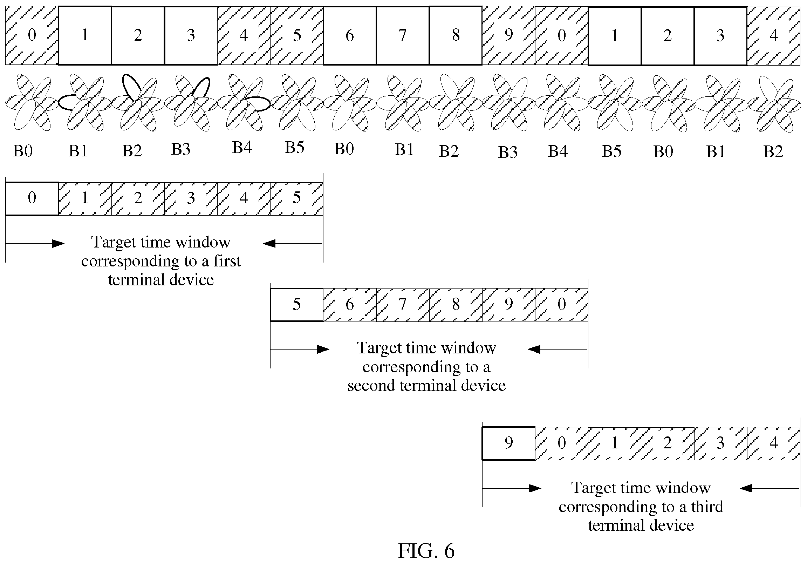

In a specific embodiment, FIG. 6 is a schematic diagram of determining a target time interval by a terminal device, wherein FIG. 6 does not show all of the features required by the claimed invention. As shown in FIG. 6, the terminal device may be a first terminal device, a second terminal device, or a third terminal device. It is assumed that the time unit is a subframe, the first paging time unit may be referred to as a first paging subframe, and the preset second beam may be B0. Therefore, one round of beam scanning begins with B0 and ends with B5.

For ease of description, first paging subframes determined by the first terminal device, the second terminal device, and the third terminal device are the same as those in the embodiment of FIG. 5, and are still subframes 0, 5, and 9 respectively. However, in the embodiment of FIG. 6, a start location of the target time window starts from the first paging subframe.

For the first terminal device, the first paging subframe of the first terminal device is subframe 0, and subframe 0 corresponds to beam B0. Therefore, a target time window of the first terminal device is a time interval from B0 to B5, and subframes to which B0 to B5 are mapped are correspondingly subframe 0 to subframe 5. To be specific, all subframe 0 to subframe 5 carry paging information.

For the second terminal device, the first paging subframe of the second terminal device is subframe 5, and subframe 5 is corresponding to beam B5. Therefore, a target time window of the second terminal device is a time interval from B5 to B0, and subframes to which B5 to B0 are mapped are correspondingly subframe 5 to subframe 0 of a next frame. To be specific, all subframe 5 to subframe 0 of the next frame carry the paging information.

For the third terminal device, the first paging subframe of the third terminal device is subframe 9, and subframe 9 is corresponding to beam B3. Therefore, a target time window of the third terminal device is a time interval from B3 to B2, and subframes to which B3 to B2 are mapped are correspondingly subframe 9 to subframe 4 of a next frame. To be specific, all subframe 9 to subframe 4 of the next frame carry the paging information. The target time interval may be all or a part of a time interval of the target time window.

For example, the terminal device may not need to listen on a channel in the time interval of the entire target time window, may determine the target time interval only in the target time window, and listen on a channel only in the target time interval. Therefore, power and a resource of the terminal device are saved. Optionally, the target time interval may include a length of at least one time unit. Optionally, a beam sent in the target time interval may be a beam, received by the terminal device, with signal quality that meets a preset receiving condition, to ensure that the terminal device correctly receives the paging information.

For example, in the method 100, the terminal device may determine the received third beam with signal quality that meets the preset receiving condition. That the terminal device determines the target time interval based on the target time window includes the following: The terminal device determines a sending location of the third beam in the target time window; and the terminal device determines the sending location of the third beam in the target time window as the target time interval.

In this embodiment of this application, the terminal device may determine the sending location of the third beam in the target time window as the target time interval, and listen on a channel in the target time interval. The third beam is a received beam with signal quality that meets the preset receiving condition. Therefore, it is ensured that the terminal device correctly receives the paging information and saves power.

Optionally, the terminal device may measure a signal of the received beam to determine the received third beam with signal quality that meets the preset receiving condition. Alternatively, the terminal device may determine the third beam in another manner. This is not limited in this embodiment of this application.

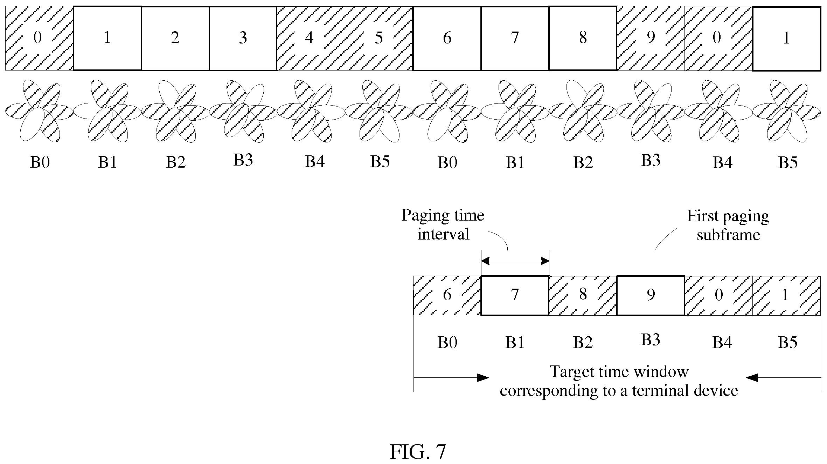

In a specific embodiment not covered by the claimed invention. FIG. 7 is a schematic diagram of determining a target time interval by a terminal device according to an embodiment of this application. As shown in FIG. 7, it is assumed that a time unit is a subframe, and the first paging time unit may be referred to as a first paging subframe. The third beam may be, for example, a beam with best signal quality that is received by the terminal device.

In the method in FIG. 7, a method for determining the target time window by the terminal device may be the same as the method in FIG. 5 and thus is not covered by the claimed invention. To be specific, the target time window is a time interval for performing one round of beam scanning starting from a preset second beam. It is assumed that the second beam is beam B0. It is assumed that the third beam is beam B1. It is assumed that the first paging subframe determined by the terminal device is subframe 9, and subframe 9 is corresponding to beam B3.

A beam, received by the terminal device, with signal quality that meets the preset receiving condition is beam B1. Signal received quality of beam B3 corresponding to subframe 9 may not meet the preset receiving condition. Therefore, the terminal device may index a subframe location of B1 by using a location of B3.

In FIG. 7, according to the method for determining the target time window in FIG. 5, in the target time window determined by the terminal device, scanning is performed starting from B0 to B5. Subframes corresponding to B0 to B5 are subframe 6 to a next subframe 1. Because the terminal device may determine that B1 is at a location two subframes before B3, the terminal device may index two subframes forward in subframe 9 to obtain subframe 7. A location of subframe 7 may be determined as the target time interval. To be specific, the terminal device may listen on a channel at the location of subframe 7 to obtain paging information.

Optionally, a calculation method for determining the target time interval based on the first paging subframe may be represented as follows:

$$\text{First paging subframe} + \text{Offset} = \text{First paging subframe} + (\text{First paging subframe} - \text{Target paging subframe})$$

The target paging subframe is a subframe to which a beam with best signal received quality in the target time window is mapped. The offset is a difference between the first paging subframe and the target paging subframe.

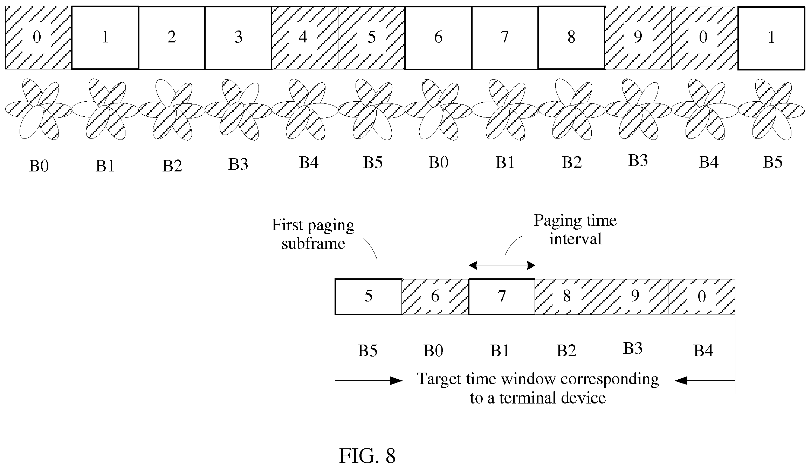

In a specific embodiment, FIG. 8 is a schematic diagram of determining a target time interval by a terminal device according to another embodiment of this application. As shown in FIG. 8, it is assumed that a time unit is a subframe, and the first paging time unit may be referred to as a first paging subframe. The third beam may be, for example, a beam with best signal quality that is received by the terminal device.

In the method in FIG. 8, a method for determining the target time window by the terminal device may be the same as the method in FIG. 6. To be specific, the target time window is a time interval for performing one round of beam scanning starting from a first beam. It is assumed that the third beam is beam B1. It is assumed that the first paging subframe determined by the terminal device is subframe 5, and subframe 5 is corresponding to beam B5.

A beam, received by the terminal device, with signal quality that meets a preset receiving condition is beam B1. Signal received quality of beam B5 corresponding to subframe 5 may not meet the preset receiving condition. Therefore, the terminal device may index a subframe location of B1 by using a location of B5.

In FIG. 8, according to the method for determining the target time window in FIG. 6, in the target time window determined by the terminal device, scanning is performed starting from B5 to B4. Subframes corresponding to B5 to B4 are subframe 5 to a next subframe 0. The terminal device may determine that B1 is at a location two subframes after B5. Therefore, the terminal device may index two subframes backward in subframe 5 to obtain subframe 7. A location of subframe 7 may be determined as the target time interval. To be specific, the terminal device may listen on a channel at the location of subframe 7 to obtain paging information.

Optionally, a calculation method for determining the target time interval based on the first paging subframe may be represented as follows:

$$\text{First paging subframe} + \text{Offset} = \text{First paging subframe} + (\text{Target paging subframe} - \text{First paging subframe})$$

The target paging subframe is a subframe to which a beam with best signal received quality in the target time window is mapped. The offset is a difference between the target paging subframe and the first paging subframe.

The foregoing describes the paging method 100 performed by the terminal device with reference to FIG. 1 to FIG. 8. The following describes a paging method performed by a network device. For brevity, content in the method that is the same as or similar to that in the foregoing method is not described herein again. The method includes, apart from further steps required by the claimed invention, the following steps:

1. The network device determines a target time window.
2. The network device sends a plurality of beams in the target time window, and a time unit to which each of the plurality of beams is mapped carries paging information.

In this embodiment of this application, all the time units, to which the plurality of beams sent by the network device in the target time window are mapped, carry the paging information, thereby improving a probability that a terminal device receives the paging information in a target time interval, and further improving efficiency of obtaining the paging information by the terminal device.

in method, the network device determines paging configuration information and beam configuration information. The paging configuration information is used to indicate a first paging time unit that carries the paging information. The beam configuration information includes a correspondence between a beam sent by the network device and a time unit to which the beam is mapped. The network device determines the first paging time unit based on the paging configuration information. The first paging time unit is a time unit that carries the paging information. That the network device determines the target time window includes the following: The network device determines the target time window based on the first paging time unit and the correspondence.

In this embodiment of this application, the network device determines the paging configuration information and the beam configuration information, and determines the target time window based on the paging configuration information and the correspondence between a beam and a time unit, so as to send the paging information. Therefore, received signal quality and receiving efficiency of the paging information are improved.

In the method, that the network device determines the target time window based on the first paging time unit and the correspondence includes the following: The network device determines a first beam mapped to the first paging time unit; and the network device determines the target time window based on the first beam, where the plurality of beams include the first beam.

Optionally and not covered by the claimed invention, in the method, the target time window is a time interval for performing one round of beam scanning starting from a preset second beam.

According to the invention, in the method, the target time window is a time interval for performing one round of beam scanning starting from the first beam.

Optionally, in the method, the paging configuration information includes first configuration information and second configuration information. The first configuration information is used to indicate a location of a radio frame that carries the paging information; and the second configuration information is used to indicate a location of the first paging time unit in the paging radio frame.

Optionally, in the method, the time unit is any one of the following: a subframe, a slot, and a symbol.

Optionally, in the method, the paging information includes at least one of the following information: a temporary identifier of the terminal device and uplink resource location information.

In the method, the plurality of beams include a beam scanned in one round of beam scanning.

The foregoing describes the paging methods in the embodiments of this application. The following describes apparatuses in the embodiments of this application with reference to the accompanying drawings.

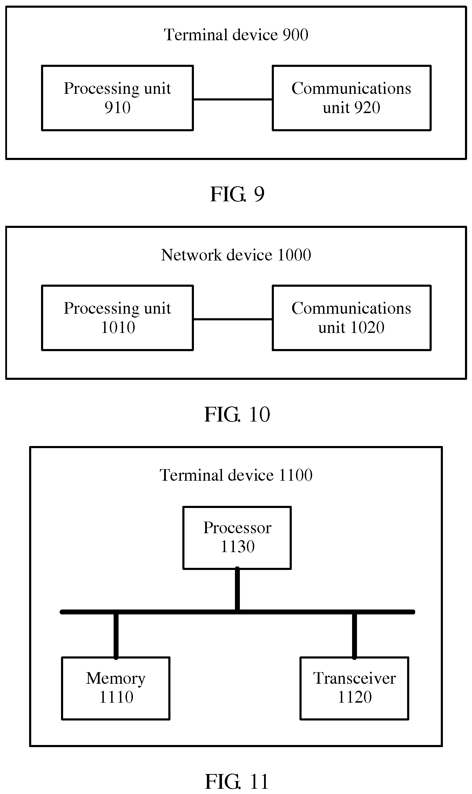

FIG. 9 is a schematic block diagram of a terminal device 900 according to an embodiment of this application. The terminal device 900 can implement the foregoing steps performed by the terminal device, wherein the claimed invention requires further steps apart from the ones mentioned below.

The terminal device 900 includes a processing unit 910 and a communications unit 920.

The processing unit 910 is configured to determine a target time interval.

The processing unit 910 is further configured to listen on a channel in the target time interval by using the communications unit 920, to obtain paging information, where the target time interval belongs to a target time window, and all time units to which the plurality of beams in the target time window are mapped carry the paging information.

FIG. 10 is a schematic block diagram of a network device 1000 according to an embodiment of this application. The network device 1000 can implement the foregoing steps performed by the network device, wherein the claimed invention requires further steps apart from the ones mentioned below.

The network device 1000 includes a processing unit 1010 and a communications unit 1020.

The processing unit 1010 is configured to determine a target time window.

The processing unit 1010 is further configured to send a plurality of beams in the target time window by using the communications unit 1020, and a time unit to which each of the plurality of beams is mapped carries paging information.

FIG. 11 is a schematic block diagram of a terminal device 1100 according to an embodiment of this application. The terminal device 1100 can implement the foregoing steps performed by the terminal device, wherein the claimed invention requires further steps apart from the ones mentioned below.

The terminal device 1100 includes:

a memory 1110, configured to store a program;
a transceiver 1120, configured to communicate with another device; and
a processor 1130, configured to execute the program stored in the memory 1110, where when the program is executed, the processor 1130 is configured to determine a target time interval; the processor 1130 is further configured to listen on a channel in the target time interval by using the transceiver 1120, to obtain paging information; the target time interval belongs to a target time window; and all time units to which a plurality of beams in the target time window are mapped carry the paging information.

For example, beam configuration information is carried in system information or dedicated information.

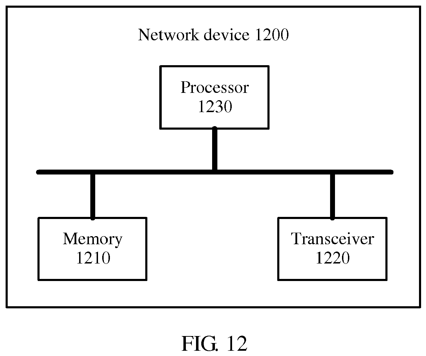

FIG. 12 is a schematic block diagram of a network device 1200 according to an embodiment of this application. The network device 1200 can implement the foregoing steps performed by the network device, wherein the claimed invention requires further steps apart from the ones mentioned below.

The network device 1200 includes:

a memory 1210, configured to store a program;
a transceiver 1220, configured to communicate with another device; and
a processor 1230, configured to execute the program stored in the memory 1210, where when the program is executed, the processor 1230 is configured to determine a target time window; the processor 1230 is further configured to send a plurality of beams in the target time window by using the transceiver 1220; and a time unit to which each of the plurality of beams is mapped carries paging information.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed apparatus and methods may be implemented in other manners. For example, the described apparatus embodiment is merely an example. For example, the unit division is merely logical function division and may be other division in actual implementation. For example, a plurality of units or components may be combined or integrated into another system.

In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, or a network device) to perform all or some of the steps of the methods described in the embodiments of this application. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

Therefore, the protection scope of this application shall be subject to the protection scope of the claims.

**Claims**

1. A paging method (100), comprising:

   (a)receiving, by a terminal device (900, 1100), paging configuration information and beam configuration information, both of which are sent from a network device (1000, 1200) to the terminal device (900, 1100), wherein the paging configuration information is used to indicate a first paging time unit that carries the paging information, and the beam configuration information comprises a correspondence between a beam and a time unit; and
   (b)determining, by the terminal device (900, 1100), a first beam mapped to the first paging time unit based on the correspondence; and
   (c)determining, by the terminal device (900, 1100), a target time window based on the first beam, wherein the target time window is a time interval for performing one round of beam scanning starting from the first beam; and
   (d) listening (S102), by the terminal device (900, 1100), on a channel in a target time interval to obtain paging information, wherein the target time interval belongs to the target time window, the target time interval being an entire time period occupied by the target time window or a part of the time period in the target time window, and all time units to which a plurality of beams in the target time window are mapped carry the paging information, wherein the plurality of beams are sent by the network device (1000, 1200) and comprise the first beam.

2. The method according to claim 1, wherein the paging information comprises at least one of the following information: a temporary identifier of the terminal device and uplink resource location information.

3. The method according to claim 1 or claim 2, wherein the paging configuration information comprises first configuration information and second configuration information; the first configuration information is used to indicate a location of the radio frame that carries the paging information; and the second configuration information is used to indicate a location of the first paging time unit in the paging radio frame.

4. The method according to any one of claims 1 to 3, wherein the time unit is any one of the following: a subframe, a slot, and a symbol.

5. The method according to any one of claims 1 to 4, wherein the method further comprises: determining, by the terminal device (900, 1100), a received third beam with signal quality that meets a preset receiving condition; and

   determining, by the terminal device (900, 1100), a sending location of the third beam in the target time window; and
   determining, by the terminal device (900, 1100), the sending location of the third beam in the target time window as the target time interval.

6. The method according to any one of claims 1 to 5, the method further comprises: if receiving, by the terminal device (900, 1100) any paging information in the target time interval, determining, by the terminal device that the paging information is obtained.

7. A paging method, comprising:

   sending, by a network device (1000, 1200), paging configuration information and beam configuration information to a terminal device (900, 1100), wherein the paging configuration information is used to indicate a first paging time unit that carries the paging information, and the beam configuration information comprises a correspondence between a beam and a time unit; and
   determining, by the network device (1000, 1200), a first beam mapped to the first paging time unit based on the correspondence; and
   determining, by the network device (1000, 1200), a target time window based on the first beam, wherein the target time window is a time interval for performing one round of beam scanning starting from the first beam; and
   sending, by the network device (1000, 1200), a plurality of beams in the target time window, wherein a time unit to which each of the plurality of beams is mapped carries paging information, wherein the plurality of beams comprise the first beam.

8.  The method according to claim 7, wherein the paging information comprises at least one of the following information: a temporary identifier of the terminal device (900, 1100) and uplink resource location information.

9.  The method according to claim 7 or claim 8, wherein the paging configuration information comprises first configuration information and second configuration information; the first configuration information is used to indicate a location of the radio frame that carries the paging information; and the second configuration information is used to indicate a location of the first paging time unit in the paging radio frame.

10. The method according to any one of claims 7 to 9, wherein the time unit is any one of the following: a subframe, a slot, and a symbol.

11. An apparatus configured to perform the method according to any one of claims 1 to 10.

12. A computer-readable storage medium comprising instructions which, when executed by a computer, cause the computer to carry out the method according to any one of claims 1 to 10.

**Patentansprüche**

1.  Paging-Verfahren (100), das Folgendes umfasst:

    (a) Empfangen durch eine Endgerätvorrichtung (900, 1100) von Paging-Konfigurationsinformationen und Strahl-Konfigurationsinformationen, die beide von einer Netzvorrichtung (1000, 1200) an die Endgerätvorrichtung (900, 1100) gesendet werden,
    wobei die Paging-Konfigurationsinformationen verwendet werden, um eine erste Paging-Zeiteinheit, die die Paging-Informationen führt, anzugeben, und die Strahl-Konfigurationsinformationen eine Zuordnung zwischen einem Strahl und einer Zeiteinheit umfassen; und
    (b) Bestimmen durch die Endgerätvorrichtung (900, 1100) eines ersten Strahls, der auf die erste Paging-Zeiteinheit abgebildet wird, basierend auf der Zuordnung; und
    (c) Bestimmen durch die Endgerätvorrichtung (900, 1100) eines Zielzeitfensters basierend auf dem ersten Strahl, wobei das Zielzeitfenster ein Zeitintervall zum Ausführen einer Runde der Strahlabtastung, beginnend mit dem ersten Strahl, ist; und
    (d) Überwachen (S102) durch die Endgerätvorrichtung (900, 1100) eines Kanals in einem Zielzeitintervall, um Paging-Informationen zu erhalten, wobei das Zielzeitintervall zu dem Zielzeitfenster gehört, das Zielzeitintervall eine gesamte Zeitspanne, die durch das Zielzeitfenster belegt wird, oder ein Teil der Zeitspanne in dem Zielzeitfenster ist, und alle Zeiteinheiten, auf die mehrere Strahlen in dem Zielzeitfenster abgebildet werden, die Paging-Informationen führen, wobei die mehreren Strahlen durch die Netzvorrichtung (1000, 1200) gesendet werden und den ersten Strahl umfassen.

2.  Verfahren nach Anspruch 1, wobei die Paging-Informationen wenigstens eine der folgenden Informationen umfassen: eine temporäre Kennung der Endgerätvorrichtung und Aufwärtsstreckenbetriebsmittel-Ortsinformationen.

3.  Verfahren nach Anspruch 1 oder Anspruch 2, wobei die Paging-Konfigurationsinformationen erste Konfigurationsinformationen und zweite Konfigurationsinformationen umfassen; die ersten Konfigurationsinformationen verwendet werden, um einen Ort des Funkrahmens, der die Paging-Information führt, anzugeben; und die zweiten Konfigurationsinformationen verwendet werden, um einen Ort der ersten Paging-Zeiteinheit im Paging-Funkrahmen anzugeben.

4.  Verfahren nach einem der Ansprüche 1 bis 3, wobei die Zeiteinheit irgendeines des Folgenden ist: ein Unterrahmen, ein Schlitz und ein Symbol.

5.  Verfahren nach einem der Ansprüche 1 bis 4, wobei das Verfahren ferner Folgendes umfasst: Bestimmen durch die Endgerätvorrichtung (900, 1100) eines empfangenen dritten Strahls mit einer Signalqualität, die eine voreingestellte Empfangsbedingung erfüllt; und

    Bestimmen durch die Endgerätvorrichtung (900, 1100) eines Sendeorts des dritten Strahls in dem Zielzeitfenster;

und

Bestimmen durch die Endgerätvorrichtung (900, 1100) des Sendeorts des dritten Strahls in dem Zielzeitfenster als das Zielzeitintervall.

6. Verfahren nach einem der Ansprüche 1 bis 5, wobei das Verfahren ferner Folgendes umfasst: falls durch die Endgerätvorrichtung (900, 1100) in dem Zielzeitintervall irgendwelche Paging-Informationen empfangen werden, Bestimmen durch die Endgerätvorrichtung, dass die Paging-Informationen erhalten werden.

7. Paging-Verfahren, das Folgendes umfasst:

Senden durch eine Netzvorrichtung (1000, 1200) von Paging-Konfigurationsinformationen und Strahl-Konfigurationsinformationen an eine Endgerätvorrichtung (900, 1100),
wobei die Paging-Konfigurationsinformationen verwendet werden, um eine erste Paging-Zeiteinheit, die die Paging-Informationen führt, anzugeben, und die Strahl-Konfigurationsinformationen eine Zuordnung zwischen einem Strahl und einer Zeiteinheit umfassen; und
Bestimmen durch die Netzvorrichtung (1000, 1200) eines ersten Strahls, der auf die erste Paging-Zeiteinheit abgebildet ist, basierend auf der Zuordnung; und
Bestimmen durch die Netzvorrichtung (1000, 1200) eines Zielzeitfensters basierend auf dem ersten Strahl, wobei das Zielzeitfenster ein Zeitintervall zum Ausführen einer Runde der Strahlabtastung, beginnend mit dem ersten Strahl, ist; und
Senden durch die Netzvorrichtung (1000, 1200) mehrerer Strahlen in dem Zielzeitfenster wobei eine Zeiteinheit, auf die jeder der mehreren Strahlen abgebildet wird, Paging-Informationen führt, wobei die mehreren Strahlen den ersten Strahl umfassen.

8. Verfahren nach Anspruch 7, wobei die Paging-Informationen wenigstens eine der folgenden Informationen umfassen: eine temporäre Kennung der Endgerätvorrichtung (900, 1100) und Aufwärtsstreckenbetriebsmittel-Ortsinformationen.

9. Verfahren nach Anspruch 7 oder Anspruch 8, wobei die Paging-Konfigurationsinformationen erste Konfigurationsinformationen und zweite Konfigurationsinformationen umfassen; die ersten Konfigurationsinformationen verwendet werden, um einen Ort des Funkrahmens, der die Paging-Information führt, anzugeben; und die zweiten Konfigurationsinformationen verwendet werden, um einen Ort der ersten Paging-Zeiteinheit im Paging-Funkrahmen anzugeben.

10. Verfahren nach einem der Ansprüche 7 bis 9, wobei die Zeiteinheit irgendeines des Folgenden ist: ein Unterrahmen, ein Schlitz und ein Symbol.

11. Einrichtung, die konfiguriert ist, das Verfahren nach einem der Ansprüche 1 bis 10 auszuführen.

12. Computerlesbares Speichermedium, das Anweisungen umfasst, die dann, wenn sie durch einen Computer ausgeführt werden, den Computer veranlassen, das Verfahren nach einem von Ansprüchen 1 bis 10 auszuführen

## Revendications

1. Procédé de paging (100), comprenant :

(a) la réception, par un dispositif terminal (900, 1100), d'informations de configuration de paging et d'informations de configuration de faisceau, les unes comme les autres étant envoyées d'un dispositif de réseau (1000, 1200) au dispositif terminal (900, 1100),
les informations de configuration de paging servant à indiquer une première unité de temps de paging qui véhicule les informations de paging, et les informations de configuration de faisceau comprenant une correspondance entre un faisceau et une unité de temps ; et
(b) la détermination, par le dispositif terminal (900, 1100), d'un premier faisceau mappé sur la première unité de temps de paging sur la base de la correspondance ; et
(c) la détermination, par le dispositif terminal (900, 1100), d'une fenêtre de temps cible sur la base du premier faisceau,
la fenêtre de temps cible étant un intervalle de temps pour effectuer un cycle de balayage de faisceaux en commençant par le premier faisceau ; et

(d) l'écoute (S102), par le dispositif terminal (900, 1100), sur un canal dans un intervalle de temps cible afin d'obtenir des informations de paging, l'intervalle de temps cible appartenant à la fenêtre de temps cible, l'intervalle de temps cible étant une période de temps complète occupée par la fenêtre de temps cible ou une partie de la période de temps dans la fenêtre de temps cible, et toutes les unités de temps sur lesquelles sont mappés une pluralité de faisceaux dans la fenêtre de temps cible véhiculant les informations de paging, la pluralité de faisceaux étant envoyés par le dispositif de réseau (1000, 1200) et comprenant le premier faisceau.

2. Procédé selon la revendication 1, dans lequel les informations de paging comprennent au moins une des informations suivantes : un identifiant temporaire du dispositif terminal et des informations d'emplacement de ressource en liaison montante.

3. Procédé selon la revendication 1 ou la revendication 2, dans lequel les informations de configuration de paging comprennent des premières informations de configuration et des deuxièmes informations de configuration ; les premières informations de configuration servent à indiquer un emplacement de la trame radio qui véhicule les informations de paging ; et les deuxièmes informations de paging servent à indiquer un emplacement de la première unité de temps de paging dans la trame radio de paging.

4. Procédé selon l'une quelconque des revendications 1 à 3, dans lequel l'unité de temps est l'un quelconque des éléments suivants : une sous-trame, un slot, et un symbole.

5. Procédé selon l'une quelconque des revendications 1 à 4, le procédé comprenant en outre :

la détermination, par le dispositif terminal (900, 1100), d'un troisième faisceau reçu dont la qualité de signal remplit une condition de réception prédéfinie ; et

la détermination, par le dispositif terminal (900, 1100), d'un emplacement d'envoi du troisième faisceau dans la fenêtre de temps cible ; et

la détermination, par le dispositif terminal (900, 1100), de l'emplacement d'envoi du troisième faisceau dans la fenêtre de temps cible comme étant l'intervalle de temps cible.

6. Procédé selon l'une quelconque des revendications 1 à 5, le procédé comprenant en outre :

en cas de réception, par le dispositif terminal (900, 1100), d'informations de paging quelconques dans l'intervalle de temps cible, la détermination, par le dispositif terminal, que les informations de paging sont obtenues.

7. Procédé de paging, comprenant :

l'envoi, par un dispositif de réseau (1000, 1200), d'informations de configuration de paging et d'informations de configuration de faisceau à un dispositif terminal (900, 1100),

les informations de configuration de paging servant à indiquer une première unité de temps de paging qui véhicule les informations de paging, et les informations de configuration de faisceau comprenant une correspondance entre un faisceau et une unité de temps ; et

la détermination, par le dispositif de réseau (1000, 1200), d'un premier faisceau mappé sur la première unité de temps de paging sur la base de la correspondance ; et

la détermination, par le dispositif de réseau (1000, 1200), d'une fenêtre de temps cible sur la base du premier faisceau,

la fenêtre de temps cible étant un intervalle de temps pour effectuer un cycle de balayage de faisceaux en commençant par le premier faisceau ; et

l'envoi, par le dispositif de réseau (1000, 1200), d'une pluralité de faisceaux dans la fenêtre de temps cible,

une unité de temps sur laquelle est mappé chacun de la pluralité de faisceaux véhiculant des informations de paging, la pluralité de faisceaux comprenant le premier faisceau.

8. Procédé selon la revendication 7,

dans lequel les informations de paging comprennent au moins une des informations suivantes : un identifiant temporaire du dispositif terminal (900, 1100) et des informations d'emplacement de ressource en liaison montante.

9. Procédé selon la revendication 7 ou la revendication 8, dans lequel les informations de configuration de paging comprennent des premières informations de configuration et des deuxièmes informations de configuration ; les premières informations de configuration servent à indiquer un emplacement de la trame radio qui véhicule les informations de paging ; et les deuxièmes informations de paging servent à indiquer un emplacement de la première unité de temps de paging dans la trame radio de paging.

10. Procédé selon l'une quelconque des revendications 7 à 9, dans lequel l'unité de temps est l'un quelconque des éléments suivants : une sous-trame, un slot, et un symbole.

11. Appareil configuré pour réaliser le procédé selon l'une quelconque des revendications 1 à 10.

12. Support de stockage lisible par ordinateur comprenant des instructions qui, lorsqu'elles sont exécutées par un ordinateur, amènent l'ordinateur à mettre en oeuvre le procédé selon l'une quelconque des revendications 1 à 10.

| Time unit | 0 | 1 | 2 | 3 | 4 | 5 | 6 | 7 | 8 | 9 | 0 | 1 |

Beam B0 B1 B2 B3 B4 B5 B0 B1 B2 B3 B4 B5

FIG. 1

| Time unit | 0 | 1 | 2 | 3 | 4 | 5 | 6 | 7 | 8 | 9 | 0 | 1 |

Beam group: BG0 BG1 BG2 BG3 BG4 BG5 BG0 BG1 BG2 BG3 BG4 BG5

FIG. 2

Beam

Network
device

Terminal
device

FIG. 3

<u>100</u>

A terminal device determines a target time interval ⎰ S101

The terminal device listens on a channel in the target time
interval to obtain paging information, where the target time
interval belongs to a target time window, and all time units
to which a plurality of beams in the target time window are
mapped carry the paging information ⎰ S102

FIG. 4

Target time window corresponding
to a first terminal device

Target time window corresponding
to a second terminal device

Target time window corresponding
to a third terminal device

FIG. 5

EP 3 567 753 B1

FIG. 6

| 0 | 1 | 2 | 3 | 4 | 5 | 6 | 7 | 8 | 9 | 0 | 1 |

B0 B1 B2 B3 B4 B5 B0 B1 B2 B3 B4 B5

Paging time
interval

First paging
subframe

| 6 | 7 | 8 | 9 | 0 | 1 |

B0 B1 B2 B3 B4 B5

Target time window
corresponding to a terminal device

FIG. 7

First paging subframe

Paging time interval

Target time window corresponding to a terminal device

FIG. 8

Terminal device 900

Processing unit 910 — Communications unit 920

FIG. 9

Network device 1000

Processing unit 1010 — Communications unit 1020

FIG. 10

Terminal device 1100

Processor 1130

Memory 1110

Transceiver 1120

FIG. 11

Network device 1200

Processor
1230

Memory
1210

Transceiver
1220

FIG. 12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014189279 A1

**Non-patent literature cited in the description**

- **SAMSUNG.** Paging in NR. *3GPP DRAFT; R2-1700823 Paging in NR, 3GPP, Mobile Competence Center; 650, ROUTE DES LUCIOLES; F-06921 SOPHIA-ANTIPOLIS CEDEX; FRANCE,* 03 February 2017, vol. RAN WG2 (Athens
- **MEDIATEK INC.** Paging in NR with Beam Sweeping. *3GPP DRAFT; R2-1701331 Paging in NR with Beam Sweeping, 3GPP, Mobile Competence Center; 650, ROUTE DES LUCIOLES; F-06921 SOPHIA-ANTIPOLIS CEDEX; FRANCE,* 03 February 2017, vol. RAN WG2 (Athens
- **SAMSUNG.** Discussion on paging in NR - Multi-beam aspects. *3GPP DRAFT; R2-166790 NR Paging, 3GPP, Mobile Competence Center; 650, ROUTE DES LUCIOLES; F-06921 SOPHIA-ANTIPOLIS CEDEX; FRANCE,* 21 August 2016, vol. RAN WG1
- **NTT DOCOMO et al.** Discussion on paging design for NR. *3GPP DRAFT; R1-1700612 Discussion on paging design for NR, 3GPP, Mobile Competence Center; 650, ROUTE DES LUCIOLES; F-06921 SOPHIA-ANTIPOLIS CEDEX; FRANCE,* 16 January 2017, vol. RAN WG1